# EUROPÄISCHE PATENTSCHRIFT

(11) **EP 0 865 702 B1**
(45) Veröffentlichungstag und Bekanntmachung des Hinweises auf die Patenterteilung: **23.08.2000**
(21) Anmeldenummer: 96946048.4
(22) Anmeldetag: 06.12.1996
(51) Int. Cl.: H04M 1/72, H04Q 7/32

(54) **VERFAHREN ZUM ERKENNEN VON BETRIEBSZUSTÄNDEN EINES ELEKTRISCHEN GERÄTES UND ELEKTRISCHES GERÄT ZUM ERKENNEN VON GERÄTESPEZIFISCHEN BETRIEBSZUSTÄNDEN**
METHOD OF DETECTING OPERATING STATES OF AN ELECTRICAL APPARATUS AND ELECTRICAL APPARATUS FOR DETECTING APPARATUS-SPECIFIC OPERATING STATES
PROCEDE POUR DETECTER DES ETATS DE FONCTIONNEMENT D'UN APPAREIL ELECTRIQUE, ET APPAREIL ELECTRIQUE POUR DETECTER DES ETATS DE FONCTIONNEMENT SPECIFIQUES DE CET APPAREIL

(30) Priorität: 07.12.1995 DE 19545762
(43) Veröffentlichungstag der Anmeldung: 23.09.1998
(73) Patentinhaber: SIEMENS AKTIENGESELLSCHAFT, 80333 München (DE)
(72) Erfinder: MERKER, Andreas, D-48612 Horstmar (DE)
(86) Internationale Anmeldenummer: DE9602340
(87) Internationale Veröffentlichungsnummer: WO9721298

(56) Entgegenhaltungen:
- EP-A- 0 279 233
- EP-A- 0 514 072
- US-A- 5 379 338

## Beschreibung

Die Erfindung bezieht sich auf ein Verfahren zum Erkennen von Betriebszuständen eines elektrischen Gerätes gemäß dem Oberbegriff des Patentanspruches 1 und auf ein elektrisches Gerät zum Erkennen von gerätespezifischen Betriebszuständen gemäß dem Oberbegriff des Patentanspruches 6.

Elektrische Geräte, die aus einem Ausgangszustand verschiedene Betriebszustände einnehmen können, sind beispielsweise mobile Telekommunikationsgeräte. Diese Telekommunikationsgeräte können beispielsweise als Schnurlos-Mobilteile nach dem DECT/GAP-Standard (**D**igital **E**uropean **C**ordless **T**elecommunication; vgl. **(1):** Nachrichtentechnik Elektronik 42 (1992, Jan./Feb.), Nr. 1, Berlin, DE; U.Pilger: "Struktur des DECT-Standards", Seiten 23 bis 29; **(2)**: Philips Telecommunication Review, Vol. 49, Nr. 3, Sept. 1991; R.Mulder: "DECT Universal Cordless Access System", Seiten 68 bis 73;/**G**eneric **A**ccess **P**rofile; vgl. ETSI-Publikation prETS 300444, April 1995, Final Draft, ETSI, FR) oder als Mobilfunk-Mobilteile nach dem GSM-Standard (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152) ausgebildet sein. Die verschiedenen Betriebszustände des mobilen Telekommunikationsgerätes ergeben sich z.B. durch telekommunikationsgerätspezifische Standardmerkmale und/oder telekommunikationsgerätspezifische Leistungsmerkmale.

Ein telekommunikationsgerätspezifisches Standardmerkmal ist beispielsweise das Aufladen des in dem Telekommunikationsgerät verwendeten Energiespeichers (z. B. Akkumulators).

Ein telekommunikationsgerätspezifisches Leistungsmerkmal ist beispielsweise das Leistungsmerkmal "Freisprechen" und "Lauthören/Freihören".

Aus der EP-0 313 776 B1 ist ein mobiles Telekommunikationsgerät (Schnurlos-Mobilteil) bekannt, das mit einer Ladeschale eine (temporäre) Funktionseinheit derart bildet, daß sowohl das Standardmerkmal "Akkuaufladung" als auch das Leistungsmerkmal "Freisprechen" und/oder "Lauthören" aktivierbar ist.

Aus der EP-0 624 021 A2 und der WO 92/00640 sind weiterhin mobile Telekommunikationsgeräte (Schnurlos-Mobilteile bzw. Mobilfunk-Handgeräte) bekannt, mit denen das Leistungsmerkmal "Freisprechen" realisierbar ist. Das mobile Telekommunikationsgerät weist dazu eine als Kopfhörer (earphone, headset) ausgebildete Hörkapsel auf, die über eine Leitung mit dem Handapparat des Telekommunikationsgerätes (lösbar) verbunden ist. In dem Handapparat sind die übrigen telekommunikationsspezifischen Teile angeordnet bzw. enthalten. Zur Realisierung des Leistungsmerkmales "Freisprechen" ist es möglich, daß - gemäß der EP-0 624 021 A2 - der Handapparat mit dem Mikrofon bzw. - gemäß der WO 92/00640 - ein externes Mikrofon an der Hörkapselleitung in der Nähe des Mundes (z. B. Jacken- oder Hemdtasche) befestigt und die Hörkapsel in das Ohr gesteckt wird.

Aufgrund der vorstehend beschriebenen Ausprägungen eines mobilen Telekommunikationsgerätes unterscheidet man z.B. bei den Schnurlos-Mobilteilen zwischen Standard-Mobilteilen und Komfort-Mobilteilen.

Während die Standard-Mobilteile nur das Standardmerkmal "Akkuaufladung" aufweisen, sind bei den Komfort-Mobilteilen sowohl das Standardmerkmal "Akkuaufladung" als auch das Leistungsmerkmal "Freisprechen" und/oder "Lauthören/Freihören" realisierbar.

FIG 1 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau eines in dem Siemens-Schnurlostelefon "Gigaset 951/952" (vgl. telcom report 16 (1993), Heft 1, Seiten 26 und 27) verwendeten Standard-Mobilteiles S-MT, das zum Aufladen des in dem Standard-Mobilteil S-MT verwendeten Energiespeicher (z.B. Akkumulator) mit einer Standard-Ladestation S-LST eine (temporäre) Funktionseinheit bildet.

Der Schaltungsaufbau besteht aus einem ersten Funkteil S-FKT, einer ersten Signalverarbeitungseinrichtung S-SVE mit einem als Burst Mode Controller S-BMC ausgebildeten ersten Signalsteuerungsteil S-SST und einem als CODEC und AD/DA- Wandler ausgebildeten ersten Signalumformungsteil S-SUT, einem ersten Taktgenerator S-TG, einem als Zentrale Steuerung S-ZS ausgebildeten ersten Mikrocontroller S-µC, einer ersten BOF-Schnittstelle S-BSS zu einer ersten Bedienoberfläche S-BOF mit einer ersten Tastatur S-TA, einer ersten Anzeigeeinrichtung S-AE, einer ersten Hörkapsel S-HK, einem ersten Mikrofon S-MF und einer ersten Tonrufklingel S-TRK, einer ersten Stromversorgung S-SV und einer ersten Anschlußschnittstelle S-ASS zur Standard-Ladestation S-LST, die in der dargestellten Weise miteinander verbunden sind. Die prinzipielle Funktionsweise des Schaltungsaufbaus ist beispielsweise in der vorstehend zitierten Druckschrift Components 31 (1993), Heft 6, Seiten 215 bis 218 beschrieben.

FIG 2 zeigt ausgehend von der EP-0 313 776 B1 im Zusammenhang mit der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau eines Komfort-Mobilteiles K-MT, das zum Aufladen des in dem Komfort-Mobilteil S-MT verwendeten Energiespeichers (z.B. Akkumulator) und zur Realisierung des Leistungsmerkmales "Freisprechen" und "Lauthören" mit einer Komfort-Ladestation K-LST eine (temporäre) Funktionseinheit bildet.

Der Schaltungsaufbau besteht aus einem zweiten Funkteil K-FKT, einer zweiten Signalverarbeitungseinrichtung K-SVE mit einem als Burst Mode Controller K-BMC ausgebildeten zweiten Signalsteuerungsteil K-SST und einem als CODEC und AD/DA-Wandler ausgebildeten zweiten Signalumformungsteil K-SUT, einem zweiten Taktgenerator K-TG, einem als Zentrale Steuerung K-ZS ausgebildeten zweiten Mikrocontroller K-µC mit einem Analog/Digital-Wandler ADW, einer zweiten BOF-Schnittstelle K-BSS zu einer zweiten Bedienoberfläche K-BOF mit einer zweiten Tastatur K-TA, einer zweiten Anzeigeeinrichtung K-AE, einer zweiten Hörkapsel K-HK, einem zweiten Mikrofon K-MF und einer zweiten Tonrufklingel K-TRK, einer zweiten Stromversorgung K-SV und einer zweiten Anschlußschnittstelle K-ASS zur Komfort-Ladestation K-LST, die in der dargestellten Weise miteinander verbunden sind. Die prinzipielle Funktionsweise des Schaltungsaufbaus ist beispielsweise in der vorstehend zitierten Druckschrift Components 31 (1993), Heft 6, Seiten 215 bis 218 beschrieben.

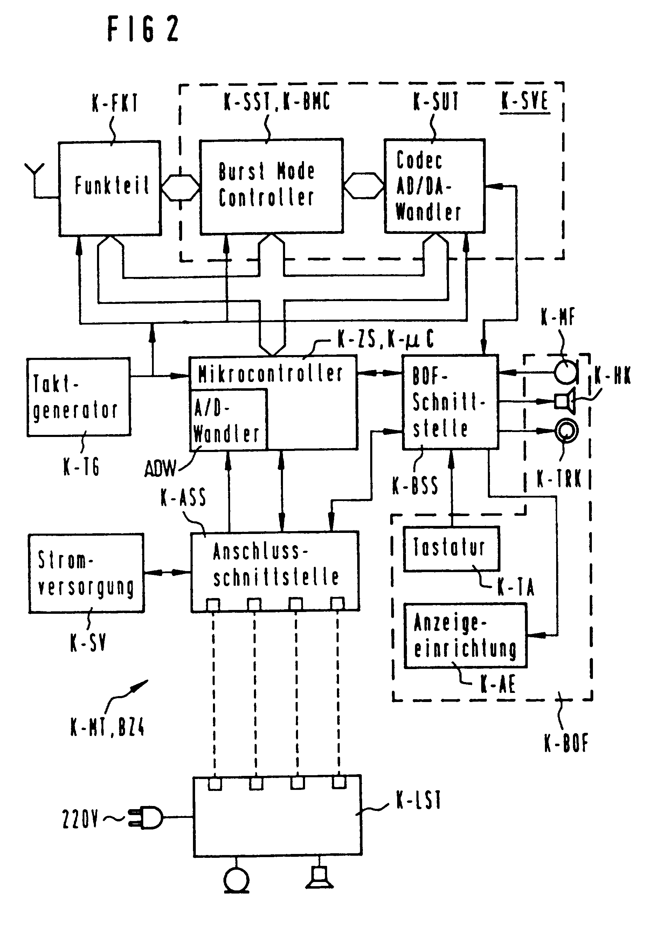

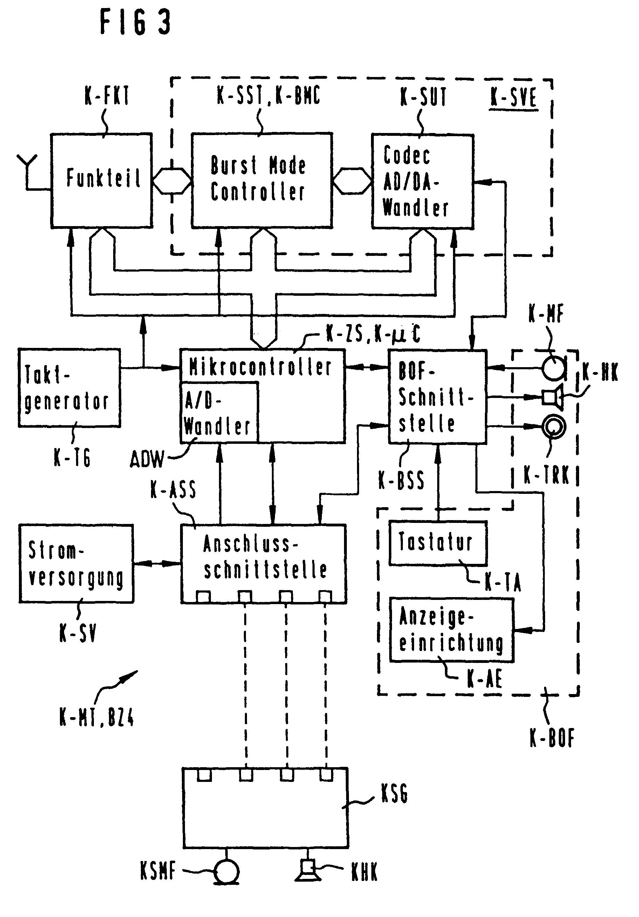

FIG 3 zeigt ausgehend von der EP-0 624 021 A2 und der WO 92/00640 im Zusammenhang mit der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau des Komfort-Mobilteiles K-MT nach FIG 2, das zur Realisierung des Leistungsmerkmales "Freisprechen" und "Freihören" mit einer Kopfsprechgarnitur KSG mit einem Kopfsprechmikrofon KSMF und einem Kopfhörkapsel KHK vorzugsweise lösbar verbunden ist.

Der Schaltungsaufbau besteht aus dem Funkteil K-FKT, der Signalverarbeitungseinrichtung K-SVE mit dem als Burst Mode Controller K-BMC ausgebildeten Signalsteuerungsteil K-SST und dem als CODEC und AD/DA- Wandler ausgebildeten Signalumformungsteil K-SUT, dem Taktgenerator K-TG, dem als Zentrale Steuerung K-ZS ausgebildeten Mikrocontroller K-µC mit einem Analog/Digital-Wandler ADW, der BOF-Schnittstelle K-BSS zur Bedienoberfläche K-BOF mit der Tastatur K-TA, der Anzeigeeinrichtung K-AE, der Hörkapsel K-HK, dem Mikrofon K-MF und der Tonrufklingel K-TRK, der Stromversorgung K-SV und der Anschlußschnittstelle K-ASS zur Kopfsprechgarnitur KSG, die in der dargestellten Weise miteinander verbunden sind. Die prinzipielle Funktionsweise des Schaltungsaufbaus ist beispielsweise in der vorstehend zitierten Druckschrift Components 31 (1993), Heft 6, Seiten 215 bis 218 beschrieben.

Für das Komfort-Mobilteil K-MT ergeben sich somit vier mögliche Betriebszustände: den Freisprech-/Lauthörbetrieb in Verbindung mit der Komfort-Ladestation K-LST und den Betrieb an der Komfort-Ladestation K-LST (erster Betriebszustand), den Betrieb an der Standard-Ladestation S-LST (zweiter Betriebszustand), den Freisprech-/Freihörbetrieb mit der Kopfsprechgarnitur KSG (dritter Betriebszustand) und den normalen/gewöhnlichen Handapparatebetrieb (vierter Betriebszustand).

Die der Erfindung zugrundeliegende Aufgabe besteht darin, daß ein elektrisches Gerät in der Lage ist, mehrere unterschiedliche Betriebszustände des elektrischen Gerätes schnell, einfach und sicher zu erkennen.

Diese Aufgabe wird ausgehend
1) von dem in dem Oberbegriff des Patentanspruches 1 definierten Verfahren durch die in dem Kennzeichen des Patentanspruches 1 angegebenen Merkmale und
2) von dem in dem Oberbegriff des Patentanspruches 6 definierten elektrischen Gerät durch die in dem Kennzeichen des Patentanspruches 6 angegebenen Merkmale gelöst.

Die der Erfindung zugrundeliegende Idee besteht darin, daß das elektrische Gerät bei einer Anzahl "n" von Betriebszuständen mit "n ≥ 4" des elektrischen Gerätes durch Abfragen eines Selektionsmerkmals an allen Verzweigungsstellen einer Entscheidungsebene eines Entscheidungsbaums mit mehreren Entscheidungsebenen und ebenenimmanenten Verzweigungsstellen in der Lage ist, die gerätespezifischen Betriebszustände zu erkennen.

Ein Schnurlos-Mobilteil nach Anspruch 6 und 8 mit ersten Mitteln zum Erfassen von Selektionsmerkmalen der Betriebszustände und zweiten Mitteln zum Steuern der mobilteilspezifischen Funktionsabläufe erkennt die mobilteilspezifischen Betriebszustände - einen ersten Betriebszustand "Betrieb an einer Komfort-Ladestation", einen zweiten Betriebszustand "Betrieb an einer Standard-Ladestation", einen dritten Betriebszustand "Betrieb an einer Kopfsprechgarnitur" und einen vierten Betriebszustand "Betrieb als Handapparat" - schnell, einfach und sicher dadurch, daß die die mit den ersten Mitteln verbundenen zweiten Mittel derart ausgebildet sind, daß gemäß dem Entscheidungsbaum mit den Entscheidungsebenen und den ebenenimmanenten Verzweigungsstellen an allen Verzweigungsstellen jeder Entscheidungsebene jeweils nach demselben Selektionsmerkmal gefragt wird.

Durch die Weiterbildung des Schnurlos-Mobilteils gemäß Anspruch 11 wird ein hoher Kompatibilitätsgrad zwischen Komfort-Mobilteilen, Standard-Mobilteilen, Standard-Ladestationen und Komfort-Ladestationen erreicht.

Weitere vorteilhafte Weiterbildungen der Erfindung sind in den Unteransprüchen angegeben.

Ein Ausführungsbeispiel der Erfindung wird anhand der Figuren 4 bis 16 erläutert. Es zeigen:
FIG 4 den Betrieb eines Komfort-Mobilteils an einer Komfort-Ladestation (erster Betriebszustand),
FIG 5 den Betrieb eines Komfort-Mobilteils an einer Standard-Ladestation (zweiter Betriebszustand),
FIG 6 den Betrieb eines Komfort-Mobilteils an einer Kopfsprechgarnitur (dritter Betriebszustand),
FIG 7 den Betrieb eines Standard-Mobilteils an einer KomfortLadestation (vierter Betriebszustand),
FIG 8 Ablaufdiagramm zur Einnahme von vier möglichen Betriebszuständen (erster bis vierter Betriebszustand) des Komfort-Mobilteils aus einem Ausgangszustand "Gespräch mit Mobilteil z.B. durch Drücken der 'Belegen'-Taste",
FIG 9 bis FIG 16 Ablaufdiagramme für diverse Betriebszustandswechsel des Komfort-Mobilteils.

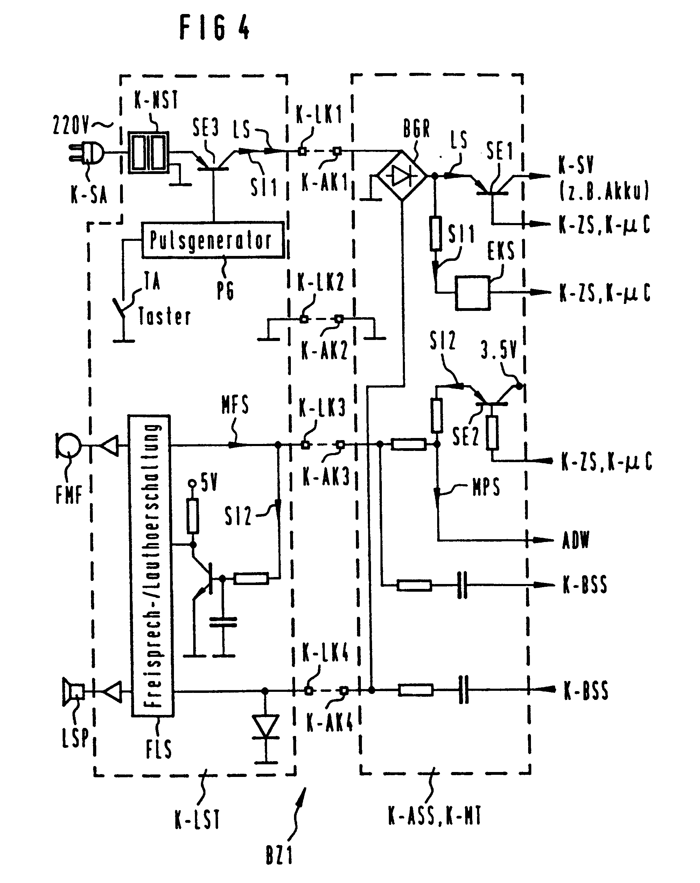

FIG 4 zeigt einen ersten Betriebszustand BZ1 des Komfort-Mobilteils K-MT nach FIG 2, in dem die zweite Anschlußschnittstelle K-ASS des Komfort-Mobilteils K-MT mit der Komfort-Ladestation K-LST nach FIG 2 verbunden ist. Der erste Betriebszustand BZ1 ist durch zwei das Standardmerkmal "Akkuaufladung" und das Leistungsmerkmal "Freisprechen und Lauthören" repräsentierende Teilbetriebszustände, einem ersten Teilbetriebszustand "Akkuaufladung" und einen zweiten Teilbetriebszustand "Freisprechen und Lauthören" charakterisiert.

Die Verbindung zwischen Komfort-Mobilteil K-MT und Komfort-Ladestation K-LST für diese Teilbetriebszustände wird über
a) vier Anschlußkontakte der zweiten Anschlußschnittstelle K-ASS des Komfort-Mobilteiles K-MT nach FIG 2 (Komfort-Anschlußkontakte), einem ersten Komfort-Anschlußkontakt K-AK1, einem zweiten Komfort-Anschlußkontakt K-AK2, einem dritten Komfort-Anschlußkontakt K-AK3 und einem vierten Komfort-Anschlußkontakt K-AK4, und
b) vier Ladestationskontakte der Komfort-Ladestation K-LST nach FIG 2 (Komfort-Ladestationskontakte), einem ersten Komfort-Ladestationskontakt K-LK1, einem zweiten Komfort-Ladestationskontakt K-LK2, einem dritten Komfort-Ladestationskontakt K-LK3 und einem vierten Komfort-Ladestationskontakt K-LK4,
hergestellt.

Über die Ladestationskontakte K-LK1, K-LK2 und die Anschlußkontakte K-AK1, K-AK2 wird das Komfort-Mobilteil K-MT von der Komfort-Ladestation K-LST geladen.

Über die Ladestationskontakte K-LK1, K-LK2, K-LK3 und die Anschlußkontakte K-AK1, K-AK2, K-AK3 werden das Leistungsmerkmal "Freisprechen" und "Lauthören" aktivierende Signalisierungsinformationen zwischen der Komfort-Ladestation K-LST und dem Komfort-Mobilteil K-MT ausgetauscht.

Über die Ladestationskontakte K-LK3, K-LK4 werden analoge Sprachsignale im Rahmen des aktivierten Leistungsmerkmals "Freisprechen" und "Lauthören" bidirektional übertragen.

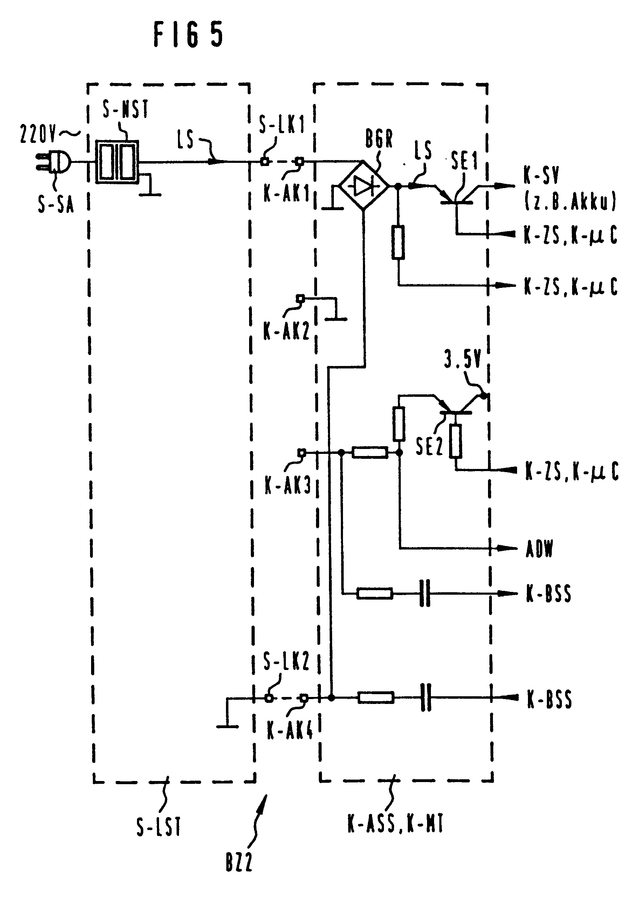

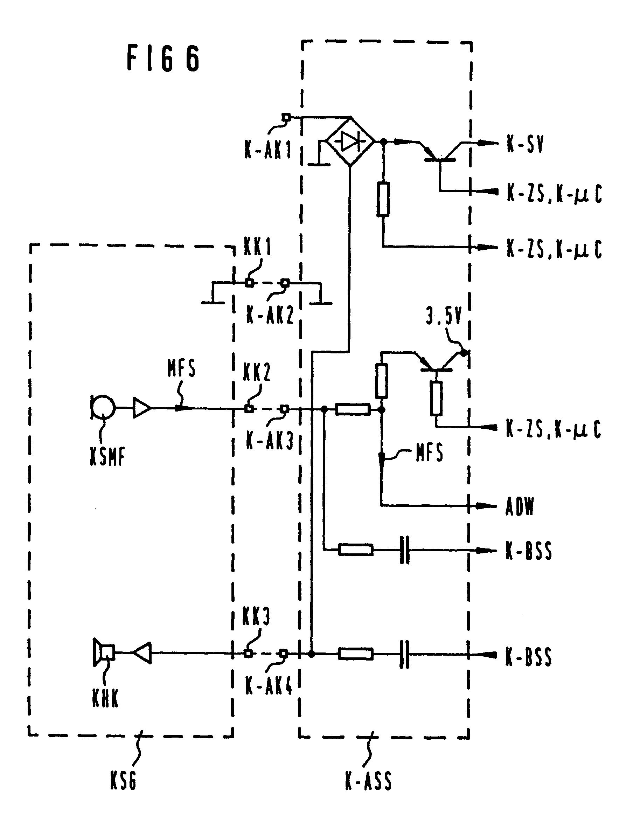

Um Fehlbedienungen des Komfort-Mobilteils K-MT bei den Teilbetriebszuständen des ersten Betriebszustandes BZ1 zu vermeiden, muß die Übertragung
a) des Ladestroms von der Komfort-Ladestation K-LST zum Komfort-Mobilteil K-MT,
b) der Signalisierungsinformationen von der Komfort-Ladestation K-LST zum Komfort-Mobilteil K-MT bzw. vom Komfort-Mobilteil K-MT zur Komfort-Ladestation K-LST und
c) der analogen Sprachsignale von der Komfort-Ladestation K-LST zum Komfort-Mobilteil K-MT bzw. vom Komfort-Mobilteil K-MT zur Komfort-Ladestation K-LST
gesteuert werden. Dies geschieht in dem Komfort-Mobilteil K-MT durch die Zentrale Steuerung K-ZS, K-µC in Verbindung mit zwei Schaltelementen, einem als Ladeschalter ausgebildeten ersten Schaltelement SE1 und einem als Quittungsschalter ausgebildeten zweiten Schaltelement SE2. Beide Schaltelemente SE1, SE2 sind im Urzustand des Komfort-Mobilteils K-MT geschlossen. Dieser Urzustand des Komfort-Mobilteils K-MT gilt auch für FIG 5 und FIG 6.

### Standardmerkmal "Akkuaufladung" (erster Teilbetriebszustand)

Zum Aufladen des Akkumulators K-SV nach FIG 2 weist die Komfort-Ladestation K-LST einen Steckeranschluß K-SA an ein Wechselspannungsnetz (z.B. 220 V ∼), einen Netzspannungstransformator K-NST und ein als Längsregler ausgebildetes drittes Schaltelement SE3 auf, die in der dargestellten Weise an den ersten Ladestationskontakt K-LK1 angeschlossen sind und eine Ladestrom LS erzeugen. In der Anschlußschnittstelle K-ASS des Komfort-Mobilteils K-MT durchfließt der Ladestrom LS zunächst einen Brückengleichrichter BGR. Danach gelangt der Ladestrom LS über den geschlossenen Ladeschalter SE1 zum Akkumulator K-SV. Ein geschlossener Ladestromkreis entsteht durch die gemeinsame Masseverbindung zwischen dem Komfort-Mobilteil K-MT und der Komfort-Ladestation K-LST über den zweiten Anschlußkontakt K-AK2 und den zweiten Ladestationskontakt K-LK2.

### Leistungsmerkmal "Freisprechen" und "Lauthören" (zweiter Teilbetriebszustand)

Die Realisierung des Leistungsmerkmals "Freisprechen" und "Lauthören" setzt sich aus zwei Phasen zusammen.

In einer Vorbereitungsphase wird in der Komfort-Ladestation K-LST eine erste Signalisierungsinformation SI1 in Form eines ersten Signalisierungsstromes über den ersten Ladestationskontakt K-LK1 und den Anschlußkontakt K-AK1 zum Komfort-Mobilteil K-MT übertragen. Die Signalisierungsinformation SI1 wird in der Komfort-Ladestation K-LST durch manuelles Betätigen eines Tasters TA ausgelöst und von einem Pulsgenerator PG erzeugt, der mit dem Längsregler verbunden ist. Für die Übertragung der Signalisierungsnformation SI1 unterbricht der Pulsgenerator PG kurzzeitig den Übertragungspfad für den Ladestrom LS und schaltet gleichzeitig den Übertragungspfad für die Signalisierungsinformation SI1 zum Ladestationskontakt K-LK1 durch. Die zum Komfort-Mobilteil K-MT übertragene Signalisierungsinformation SI1 wird in einer einen Schaltregler aufweisenden Erkennungsschaltung EKS erfaßt und an die Zentrale Steuerung K-ZS weitergeleitet. Der geschlossene Stromkreis für den ersten Signalisierungsstrom wird durch die gemeinsame Masseverbindung zwischen dem Komfort-Mobilteil K-MT und der Komfort-Ladestation K-LST über den zweiten Anschlußkontakt K-AK2 und den zweiten Ladestationskontakt K-LK2 erreicht.

In einer der Vorbereitungsphase nachfolgenden Aktivierungsphase sorgt die Zentrale Steuerung K-ZS dafür, daß der Ladeschalter SE1 geöffnet und gleichzeitig der Quittungsschalter SE2 geschlossen wird. Durch das Schließen des Quittungsschalters SE2 wird eine als Quittungsinformation zur ersten Signalisierungsinformation SI1 dienende zweite Signalisierungsinformation SI2 in Form eines zweiten Signalisierungsstromes über den dritten Anschlußkontakt K-AK3 und den dritten Ladestationskontakt K-LK3 einer Freisprech-/Lauthörschaltung FLS in der Komfort-Ladestation K-LST zugeführt. Mit dem Erhalt dieser Signalisierungsinformation SI2 schaltet die Freisprech-/Lauthörschaltung FLS ein Freisprechmikrofon FMF und einen Lautsprecher LSP ein.

Danach wird über den Analog/Digital-Wandler ADW in der Zentralen Steuerung K-ZS überprüft, ob ein durch das Einschalten des Freisprechmikrofons FMF hervorgerufener Mikrofonstrom MFS fließt.

Ist dies der Fall, dann
a) wird das Mikrofon K-MF und die Hörkapsel K-HK in dem Komfort-Mobilteil K-MT durch die Zentrale Steuerung K-ZS, K-µC abgeschaltet
b) bleibt der Quittungsschalter SE2 geschlossen.

Anderenfalls
a) bleibt das Mikrofon K-MF und die Hörkapsel K-HK in dem Komfort-Mobilteil K-MT eingeschaltet
b) wird der Quittungsschalter SE2 geöffnet.

Fließt der Mikrofonstrom MFS, so ist das Leistungsmerkmal "Freisprechen" und "Lauthören" aktiviert, und es können die analogen Sprachsignale zwischen dem Freisprechmikrofon FMF und der BOF-Schnittstelle K-BSS nach FIG 2 sowie der BOF-Schnittstelle K-BSS und dem Lautsprecher LSP über die Ladestationskontakte K-LK3, K-LK4 und die Anschlußkontakte K-AK3, K-AK4 bidirektional übertragen werden.

Der geschlossene Stromkreis für den zweiten Signalisierungsstrom, den Mikrofonstrom MFS und die analogen Sprachsignale wird wieder durch die gemeinsame Masseverbindung zwischen dem Komfort-Mobilteil K-MT und der Komfort-Ladestation K-LST über den zweiten Anschlußkontakt K-AK2 und den zweiten Ladestationskontakt K-LK2 erreicht.

Das Leistungsmerkmal "Freisprechen" und "Lauthören" wird vorzugsweise grundsätzlich in der vorstehend beschriebenen Weise von dem Komfort-Mobilteil K-MT über den Quittungsschalter SE2 und der Zentralen Steuerung K-ZS, K-µC aktiviert und auch wieder von dem Komfort-Mobilteil K-MT über den Quittungsschalter SE2 und der Zentralen Steuerung K-ZS, K-µC deaktiviert. Bei der Deaktivierung des Leistungsmerkmales wird der Ladeschalter SE1 vorzugsweise - für einen späteren Ladevorgang - wieder in seine geschlossene Ausgangsposition zurückgesetzt. Die Aktivierung bzw. Deaktivierung des Leistungsmerkmales durch das Komfort-Mobilteil K-MT hat den Vorteil, daß bei einer beim Einlegen des Mobilteils in die als Ladeschale ausgebildeten Komfort-Ladestation K-LST auftretenden Prellung des Mobilteils die Freisprech-/Lauthörschaltung FSL nicht versehentlich aktiviert wird.

Die vorstehenden, für ein Komfort-Mobilteil K-MT mit dem Leistungsmerkmal "Freisprechen" und "Lauthören" zutreffenden Ausführungen können auch auf Komfort-Mobilteile K-MT mit dem Leistungsmerkmal "Freisprechen" und/oder "Lauthören" unter Berücksichtigung der damit verbundenen leistungsmerkmalsspezifischen Änderungen ausgedehnt werden.

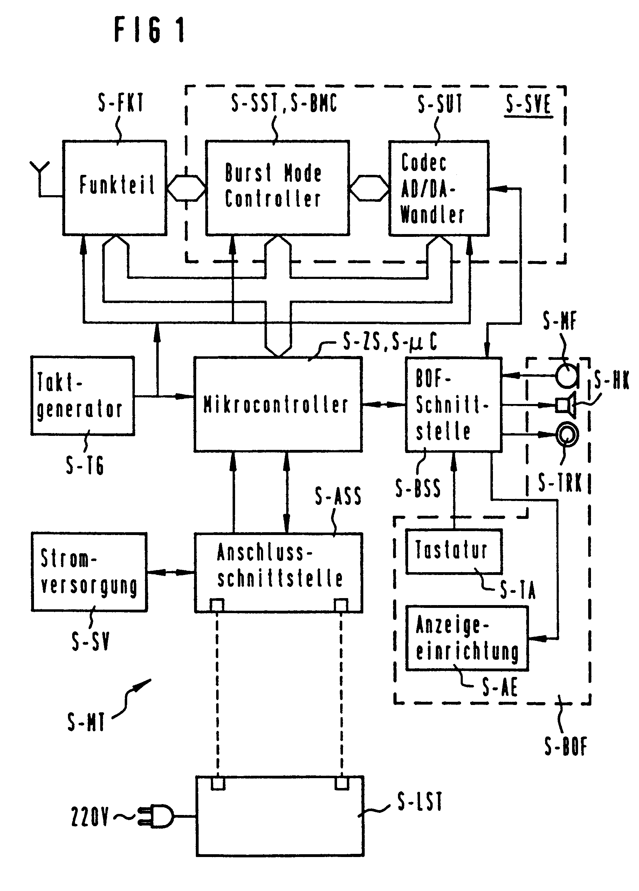

FIG 5 zeigt einen zweiten Betriebszustand BZ2 des Komfort-Mobilteils K-MT nach FIG 2, in dem die zweite Anschlußschnittstelle K-ASS des Komfort-Mobilteils K-MT mit der Standard-Ladestation S-LST nach FIG 1 verbunden ist. In dem zweiten Betriebszustand BZ2 wird von dem für das Standardmerkmal "Akkuaufladung" und das Leistungsmerkmal "Freisprechen" und "Lauthören" ausgelegte Komfort-Mobilteil K-MT mit der zweiten Anschlußschnittstelle K-ASS gemäß FIG 4 nur das Standardmerkmal unterstützt.

Die Verbindung zwischen dem Komfort-Mobilteil K-MT und der Standard-Ladestation S-LST wird dabei über
a) den ersten Anschlußkontakt K-AK1 und den vierten Anschlußkontakt K-AK1 der vier Komfort-Anschlußkontakte der zweiten Anschlußschnittstelle K-ASS des Komfort-Mobilteiles K-MT nach FIG 4 sowie
b) zwei Ladestationskontakte der Standard-Ladestation S-LST nach FIG 1 (Standard-Ladestationskontakte), einem ersten Standard-Ladestationskontakt S-LK1 und einem zweiten Standard-Ladestationskontakt S-LK2,
hergestellt. Der zweite Anschlußkontakt K-AK2 und der dritte Anschlußkontakt K-AK3 bleiben für die Verbindung zwischen Komfort-Mobilteil K-MT und Standard-Ladestation S-LST unbenutzt. Dies bedeutet, daß das als Ladeschalter ausgebildete erste Schaltelement SE1 in dem zweiten Betriebszustand BZ2 und das als Quittungsschalter ausgebildete zweite Schaltelement SE1 in dem zweiten Betriebszustand BZ2 ständig geschlossen - also im Urzustand - sind.

Zum Aufladen des Akkumulators K-SV des Komfort-Mobilteils K-MT nach FIG 2 weist die Standard-Ladestation S-LST einen Steckeranschluß S-SA an ein Wechselspannungsnetz (z.B. 220 V ∼) und einen Netzspannungstransformator S-NST auf, die in der dargestellten Weise an den ersten Ladestationskontakt S-LK1 angeschlossen sind und eine Ladestrom LS erzeugen. In der Anschlußschnittstelle K-ASS des Komfort-Mobilteils K-MT durchfließt der Ladestrom LS zunächst den an den Anschlußkontakt K-AK1 angeschlossenen Brückengleichrichter BGR. Danach gelangt der Ladestrom LS über den geschlossenen Ladeschalter SE1 zum Akkumulator K-SV. Ein geschlossener Ladestromkreis entsteht durch die gemeinsame Masseverbindung zwischen dem Komfort-Mobilteil K-MT und der Standard-Ladestation S-LST über den vierten Anschlußkontakt K-AK4 und den zweiten Ladestationskontakt S-LK2. Der Brückengleichrichter BGR ist dazu in der dargestellten Weise an einem ersten Ausgang auf das Massepotential der Anschlußschnittstelle K-ASS bzw. des Komfort-Mobilteils K-MT und an einem zweiten Ausgang über den vierten Anschlußkontakt K-AK4 und den zweiten Ladestationskontakt S-LK2 auf das Massepotential der Standard-Ladestation S-LST gelegt.

FIG 6 zeigt einen dritten Betriebszustand BZ3 des Komfort-Mobilteils K-MT nach FIG 3, in dem die zweite Anschlußschnittstelle K-ASS des Komfort-Mobilteils K-MT mit der Kopfsprechgarnitur KSG nach FIG 3 verbunden ist. In dem dritten Betriebszustand BZ3 wird von dem für das Standardmerkmal "Akkuaufladung" und das Leistungsmerkmal "Freisprechen" und "Lauthören" ausgelegte Komfort-Mobilteil K-MT mit der zweiten Anschlußschnittstelle K-ASS gemäß FIG 4 nur das Leistungsmerkmal unterstützt.

Die Verbindung zwischen dem Komfort-Mobilteil K-MT und der Kopfsprechgarniturr KSG wird dabei über
a) den zweiten Anschlußkontakt K-AK2, den dritten Anschlußkontakt K-AK3 und den vierten Anschlußkontakt K-AK1 der vier Komfort-Anschlußkontakte der zweiten Anschlußschnittstelle K-ASS des Komfort-Mobilteiles K-MT nach FIG 4 sowie
b) drei Kopfsprechgarniturkontakte der Kopfsprechgarnitur KSG nach FIG 3, einem ersten Kopfsprechgarniturkontakt KK1, einem zweiten Kopfsprechgarniturkontakt KK2 und einem dritten Kopfsprechgarniturkontakt KK3,
hergestellt. Der erste Anschlußkontakt K-AK1 bleibt für die Verbindung zwischen dem Komfort-Mobilteil K-MT und der Kopfsprechgarnitur KSG unbenutzt. Dies bedeutet, daß das als Ladeschalter ausgebildete erste Schaltelement SE1 in dem dritten Betriebszustand BZ3 ständig geschlossen ist (Urzustand des Schaltelementes SE1).

Da der Quittungsschalter SE2 im Urzustand geschlossen ist, ist beim Anstecken der Kopfsprechgarnitur KSG mit den Kopfsprechgarniturkontakten KK1..KK3 an die Anschlußschnittstelle K-ASS mit den Anschlußkontakten K-AK2...K-AK4 die Kopfsprechgarnitur KSG mit dem Kopfsprechmikrofon KSMF und der Kopfhörkapsel/dem Kopflautsprecher KHK/KLSP automatisch aktiviert.

Über den Analog/Digital-Wandler ADW in der Zentralen Steuerung K-ZS wird nun wiederum überprüft, ob ein durch das Einschalten des Kopfsprechmikrofons KSMF hervorgerufener Mikrofonstrom MFS fließt.

Ist dies der Fall, dann
a) wird das Mikrofon K-MF und die Hörkapsel K-HK in dem Komfort-Mobilteil K-MT durch die Zentrale Steuerung K-ZS, K-µC abgeschaltet
b) bleibt der Quittungsschalter SE2 geschlossen.

Anderenfalls
a) bleibt das Mikrofon K-MF und die Hörkapsel K-HK in dem Komfort-Mobilteil K-MT eingeschaltet
b) bleibt der Quittungsschalter SE2 geschlossen.

Fließt der Mikrofonstrom MFS, so ist das Leistungsmerkmal "Freisprechen" und "Freihören" aktiviert, und es können die analogen Sprachsignale zwischen dem Kopfsprechmikrofon KSMF und der BOF-Schnittstelle K-BSS nach FIG 3 sowie der BOF-Schnittstelle K-BSS und der Kopfhörkapsel KHK über die Kopfsprechgarniturkontakte KK2, KK3 und die Anschlußkontakte K-AK3, K-AK4 bidirektional übertragen werden.

Der geschlossene Stromkreis für den ggf. auftretenden Mikrofonstrom MFS und die analogen Sprachsignale wird durch die gemeinsame Masseverbindung zwischen dem Komfort-Mobilteil K-MT und der Kopfsprechgarnitur KSG über den zweiten Anschlußkontakt K-AK2 und den ersten Kopfsprechgarniturkontakt KK1 erreicht.

Die vorstehenden, für ein Komfort-Mobilteil K-MT mit dem Leistungsmerkmal "Freisprechen" und "Freihören" zutreffenden Ausführungen können auch auf Komfort-Mobilteile K-MT mit dem Leistungsmerkmal "Freisprechen" und/oder "Freihören" unter Berücksichtigung der damit verbundenen leistungsmerkmalsspezifischen Änderungen ausgedehnt werden.

Ein weiterer vierter Betriebszustand BZ4 des Komfort-Mobilteils K-MT nach FIG 2 und FIG 3 ist der Handapparatbetrieb, bei dem das Komfort-Mobilteil K-MT ohne Komfort-Ladestation K-LST, ohne Standard-Ladestation S-LST und ohne Kopfsprechgarnitur KSG betrieben wird. Die Anschlußkontakte K-AK1...K-AK4 bleiben in diesem Fall alle unbenutzt.

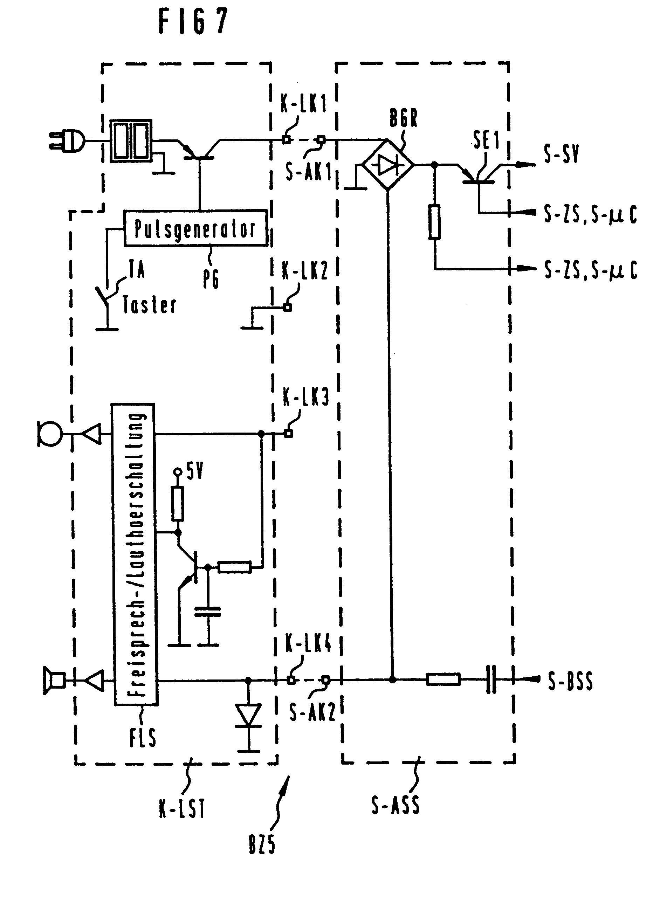

FIG 7 zeigt einen fünften Betriebszustand BZ5 des Standard-Mobilteils S-MT nach FIG 1, in dem die erste Anschlußschnittstelle S-ASS des Standard-Mobilteils S-MT mit der Komfort-Ladestation K-LST nach FIG 2 verbunden ist. In dem fünften Betriebszustand BZ2 wird von dem für das Standardmerkmal "Akkuaufladung" ausgelegte Standard-Mobilteil S-MT mit der ersten Anschlußschnittstelle S-ASS gemäß FIG 1, obwohl an der Komfort-Ladestation K-LST die Möglichkeit des "Freisprechens" und "Lauthörens" gegeben ist, nur das Standardmerkmal unterstützt.

Die Verbindung zwischen dem Standard-Mobilteil S-MT und der Komfort-Ladestation K-LST wird dabei über
a) den ersten Ladestationskontakt K-LK1 und den vierten Ladestationskontakt K-LK4 der vier Ladestationskontakte der Komfort-Ladestation K-LST nach FIG 2 sowie
b) zwei Anschlußkontakte des Standard-Mobilteils S-MT nach FIG 1 (Standard-Anschlußkontakte), einem ersten Standard-Anschlußkontakt S-AK1 und einem zweiten Standard-Anschlußkontakt S-AK2,
hergestellt. Der zweite Ladestationskontakt K-LK2 und der dritte Ladestationskontakt K-LK3 bleiben für die Verbindung zwischen Standard-Mobilteil S-MT und Komfort-Ladestation K-LST unbenutzt. Dies bedeutet, daß die Freisprech-/Lauthörschaltung FLS inaktiv ist.

Zum Aufladen des Akkumulators S-SV des Standard-Mobilteils S-MT nach FIG 1 wird in der Komfort-Ladestation K-LST mit dem Steckeranschluß K-SA für das Wechselspannungsnetz (z.B. 220 V ∼) und dem Netzspannungstransformator S-NST der Ladestrom LS erzeugt. In der ersten Anschlußschnittstelle S-ASS des Standard-Mobilteils S-MT durchfließt der Ladestrom LS zunächst den an den ersten Anschlußkontakt S-AK1 angeschlossenen Brükkengleichrichter BGR. Danach gelangt der Ladestrom LS über den geschlossenen Ladeschalter SE1 zum Akkumulator S-SV. Ein geschlossener Ladestromkreis entsteht durch die gemeinsame Masseverbindung zwischen dem Standard-Mobilteil S-MT und der Komfort-Ladestation K-LST über den zweiten Anschlußkontakt S-AK2 und den vierten Ladestationskontakt K-LK4. Der Brükkengleichrichter BGR ist dazu in der dargestellten Weise an einem ersten Ausgang auf das Massepotential der Anschlußschnittstelle S-ASS bzw. des Standard-Mobilteils S-MT und an einem zweiten Ausgang über den zweiten Anschlußkontakt S-AK2, den vierten Ladestationskontakt S-LK4 und einer Diode D auf das Massepotential der Komfort-Ladestation K-LST gelegt.

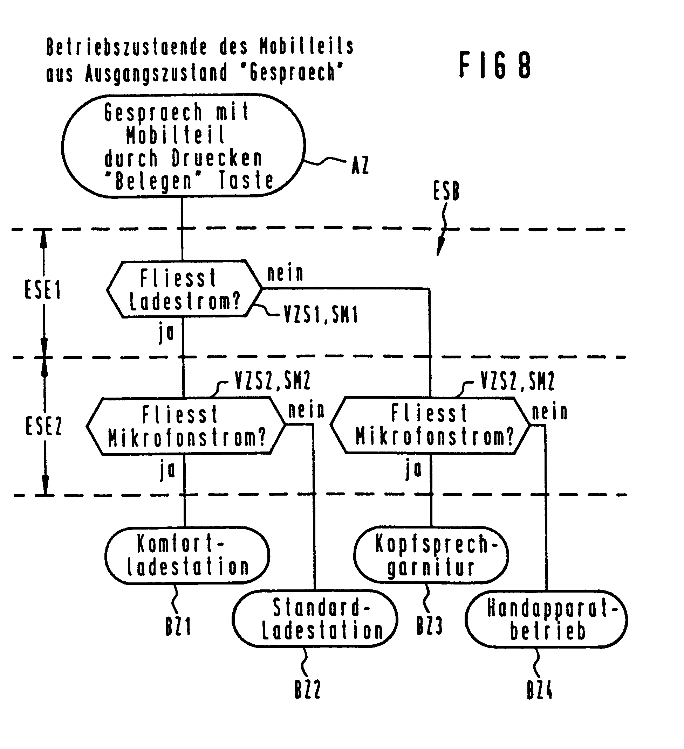

FIG 8 zeigt ein Ablaufdiagramm zur Einnahme der vier Betriebszustände BZ1...BZ4 des Komfort-Mobilteils K-MT aus einem Ausgangszustand AZ ("Gespräch mit Mobilteil z.B. durch Drücken der 'Belegen'-Taste"), das in der Zentralen Steuerung K-ZS des Komfort-Mobilteils K-MT realisiert ist und abläuft. Das Ablaufdiagramm besteht aus einem Entscheidungsbaum ESB mit zwei Entscheidungsebenen, einer ersten Entscheidungsebene ESE1 und einer zweiten Entscheidungsebene ESE2. In der ersten Entscheidungsebene ESE1 ist eine erste Verzweigungsstelle VZS1 vorhanden, an der nach einem ersten Selektionsmerkmal SM1 ("Fließt ein Ladestrom ?") der Betriebszustände BZ1...BZ4 gefragt wird.

In der zweiten Entscheidungsebene ESE2 sind zwei zweite Verzweigungsstelle VZS2 vorhanden, an denen jeweils nach einem zweiten Selektionsmerkmal SM2 ("Fließt ein Mikrofonstrom ?") der Betriebszustände BZ1...BZ4 gefragt wird.

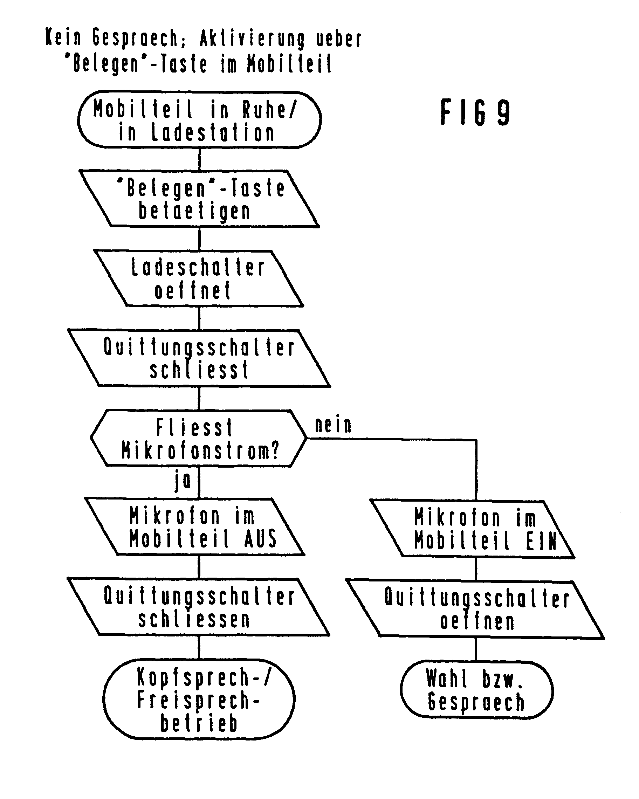

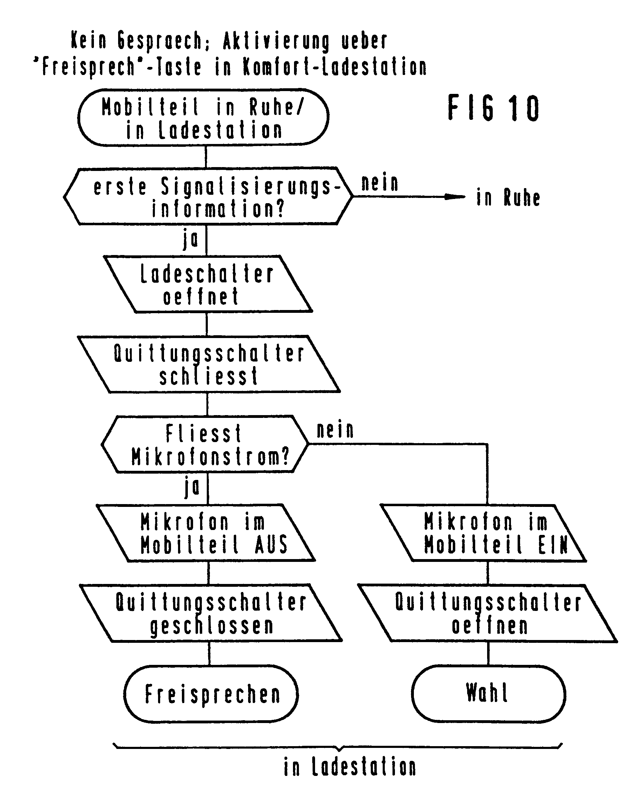

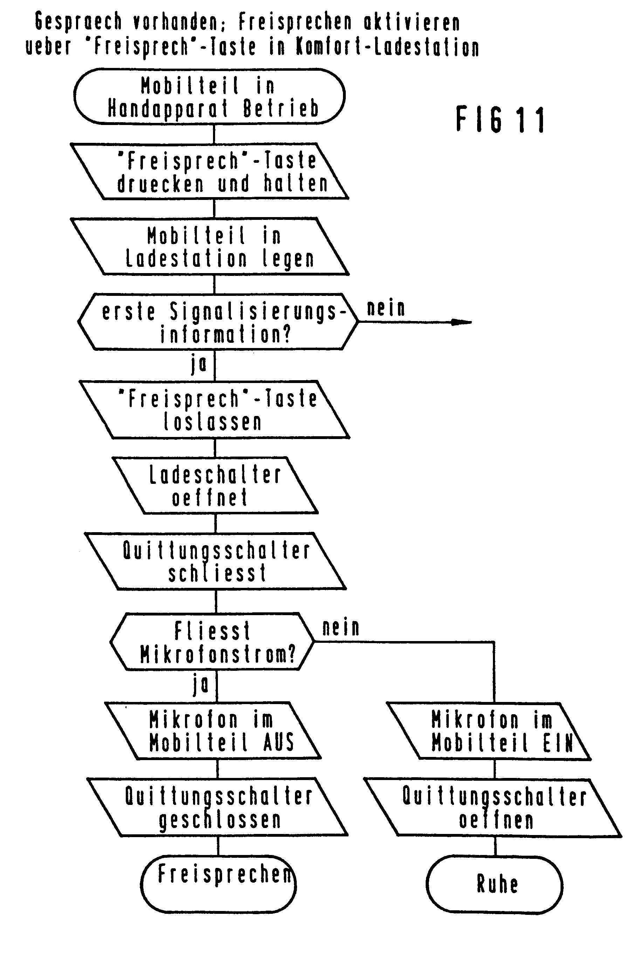

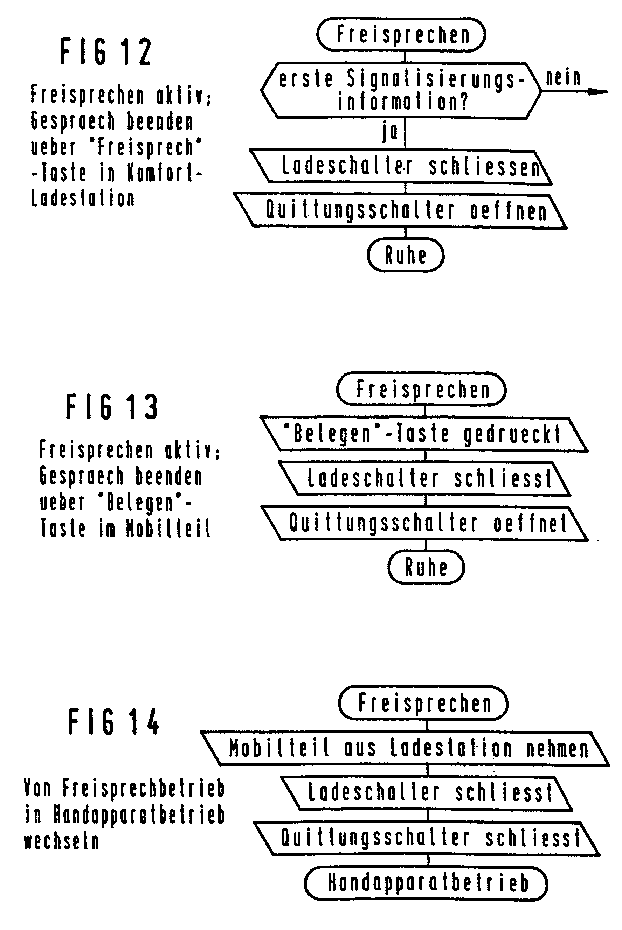

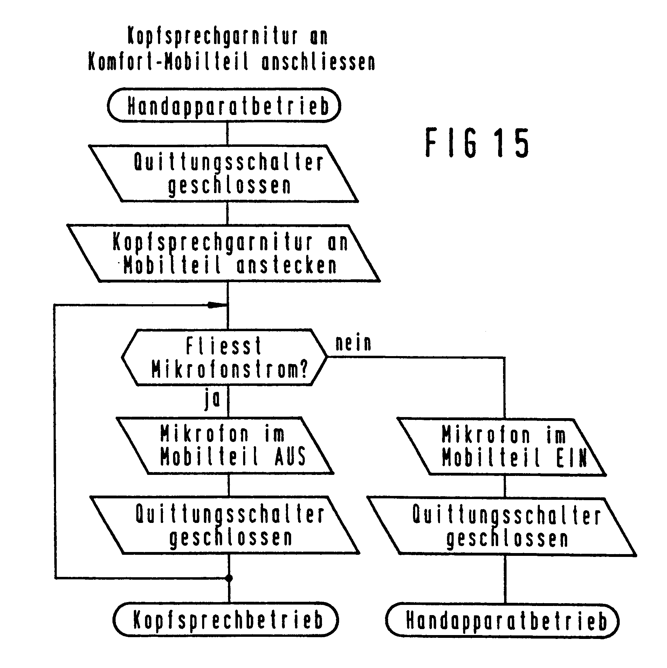

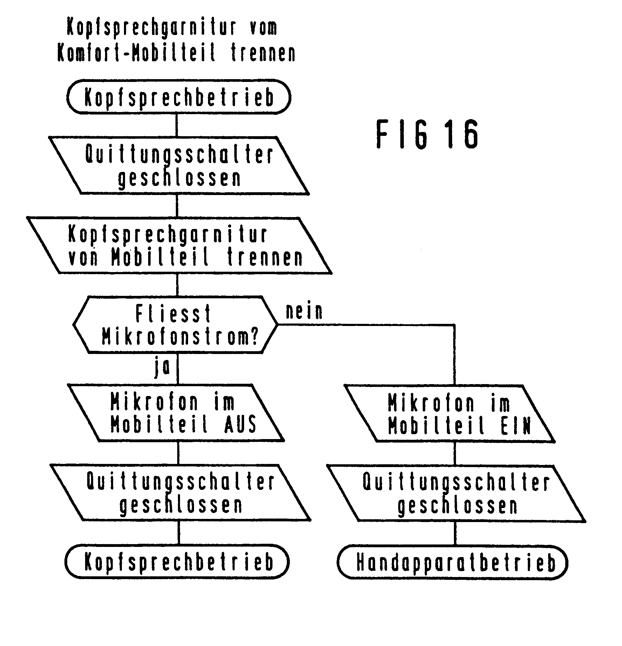

FIG 9 bis FIG 16 zeigen Ablaufdiagramme für diverse Betriebszustandswechsel des Komfort-Mobilteils K-MT, die in der Zentralen Steuerung K-ZS realisiert sind und ablaufen.

## Patentansprüche

1. Verfahren zum Erkennen von Betriebszuständen eines elektrischen Gerätes, bei dem
a) das elektrische Gerät (K-MT) eine erste Anzahl "n" von Betriebszuständen (BZ1...BZ4) mit "n ≥ 4" aus einem Ausgangszustand (AZ) einnehmen kann,
b) gemäß einem Entscheidungsbaum (ESB) mit mehreren Entscheidungsebenen (ESE1, ESE2) und ebenenimmanenten Verzweigungsstellen (VZS1, VZS2) an den Verzweigungsstellen (VZS1, VZS2) jeweils nach einem Selektionsmerkmal (SM1, SM2) der Betriebszustände (BZ1...BZ4) gefragt wird,
**dadurch gekennzeichnet,** daß
an allen Verzweigungsstellen (VZS1, VZS2) jeder Entscheidungsebene (ESE1, ESE2) jeweils nach demselben Selektionsmerkmal (SM1, SM2) gefragt wird.

2. Verfahren nach Anspruch 1, **dadurch gekennzeichnet,** daß im Sinne der Minimierung einer zweiten Anzahl "m" der Entscheidungsebenen (ESE1, ESE2) die Verzweigungsstellen (VZS1, VZS2) derart in den "m" Entscheidungsebenen (ESE1, ESE2) angeordnet werden, daß die Beziehung "2^{m} ≥ n ≥ 2^{m-1} +1" gilt.

3. Verfahren nach Anspruch 1 oder 2, **dadurch gekennzeichnet,** daß das elektrische Gerät (K-MT) ein Schnurlos-Mobilteil ist.

4. Verfahren nach Anspruch 3, **dadurch gekennzeichnet,** daß das Schnurlos-Mobilteil (K-MT) in einem ersten Betriebszustand "Betrieb an einer Komfort-Ladestation" (BZ1), einem zweiten Betriebszustand "Betrieb an einer Standard-Ladestation" (BZ2), einem dritten Betriebszustand "Betrieb an einer Kopfsprechgarnitur" (BZ3) oder einem vierten Betriebszustand "Betrieb als Handapparat" (BZ4) betrieben wird.

5. Verfahren nach Anspruch 4, **dadurch gekennzeichnet,** daß ein erstes Selektionsmerkmal "Fließt ein Ladestrom ?" (SM1) und ein zweites Selektionsmerkmal "Fließt ein Mikrofonstrom ?" (SM2) abgefragt wird.

6. Elektrisches Gerät, das
a) eine erste Anzahl "n" von Betriebszuständen (BZ1...BZ4) mit "n ≥ 4" aus einem Ausgangszustand (Az) einnehmen kann,
b) erste Mittel (K-AK1...K-AK4, SE1, SE2, ADW) zum Erfassen von Selektionsmerkmalen (SM1, SM2) der Betriebszustände (BZ1...BZ4) aufweist,
c) zweite Mittel (K-ZS, K-µC) zum Steuern der gerätespezifischen Funktionsabläufe aufweist, die mit den ersten Mitteln (K-AK1...K-AK4, SE1, SE2, ADW) verbunden sind und die derart ausgebildet sind, daß gemäß einem Entscheidungsbaum (ESB) mit mehreren Entscheidungsebenen (ESE1, ESE2) und ebenenimmanenten Verzweigungsstellen (VZS1, VZS2) an den Verzweigungsstellen (VZS1, VZS2) jeweils nach einem Selektionsmerkmal (SM1, SM2) der Betriebszustände (BZ1...BZ4) gefragt wird,
**dadurch gekennzeichnet,** daß die zweiten Mittel (K-ZS, K-µC) derart ausgebildet sind, daß an allen Verzweigungsstellen (VZS1, VZS2) jeder Entscheidungsebene (ESE1, ESE2) jeweils nach demselben Selektionsmerkmal (SM1, SM2) gefragt wird.

7. Elektrisches Gerät nach Anspruch 6, **dadurch gekennzeichnet,** daß die zweiten Mittel (K-ZS, K-µC) derart ausgebildet sind, daß im Sinne der Minimierung einer zweiten Anzahl "m" der Entscheidungsebenen (ESE1, ESE2) die Verzweigungsstellen (VZS1, VZS2) derart in den "m" Entscheidungsebenen (ESE1, ESE2) angeordnet werden, daß die Beziehung "2^{m} ≥ n ≥ 2^{m-1} +1" gilt.

8. Elektrisches Gerät nach Anspruch 6 oder 7, **dadurch gekennzeichnet,** daß das elektrische Gerät (K-MT) ein Schnurlos-Mobilteil ist.

9. Elektrisches Gerät nach Anspruch 8, **dadurch gekennzeichnet,** daß das Schnurlos-Mobilteil (K-MT) einen ersten Betriebszustand "Betrieb an einer Komfort-Ladestation" (BZ1), einen zweiten Betriebszustand "Betrieb an einer Standard-Ladestation" (BZ2), einen dritten Betriebszustand "Betrieb an einer Kopfsprechgarnitur" (BZ3) und einen vierten Betriebszustand "Betrieb als Handapparat" (BZ4) aufweist.

10. Elektrisches Gerät nach Anspruch 9, **dadurch gekennzeichnet,** daß die ersten Mittel (K-AK1...K-AK4, SE1, SE2, ADW) derart ausgebildet sind, daß ein erstes Selektionsmerkmal "Fließt ein Ladestrom ?" (SM1) und ein zweites Selektionsmerkmal "Fließt ein Mikrofonstrom ?" (SM2) erfaßbar ist.

11. Elektrisches Gerät nach Anspruch 9 oder 10, **dadurch gekennzeichnet,** daß die ersten Mittel (K-AK1...K-AK4, SE1, SE2, ADW) vier Anschlußkontakte (K-AK1...K-AK4) aufweisen, über die das elektrische Gerät (K-MT) mit einer Komfort-Ladestation (K-LST), einer Standard-Ladestation (S-LST) oder einer Kopfsprechgarnitur (KSG) verbindbar ist.

## Claims

1. Method for identification of operating modes of an electrical apparatus, in which
a) the electrical apparatus (K-MT) can assume a first number "n" of operating modes (BZ1...BZ4) where "n ≥ 4" from an original mode AZ,
b) interrogation is in each case carried out at the branch points (VZS1, VZS2) on the basis of a selection feature (SM1, SM2) of the operating modes (BZ1...BZ4) in accordance with a decision tree (ESB) having a plurality of decision levels (ESE1, ESE2) and level-immanent branch points (VZS1, VZS2),
characterized in that
interrogation is in each case carried out, at all the branch points (VZS1, VZS2) in each decision level (ESE1, ESE2), on the basis of the same selection feature (SM1, SM2).

2. Method according to Claim 1, characterized in that, in the sense of minimizing a second number "m" of decision levels (ESE1, ESE2), the branch points (VZS1, VZS2) are arranged in the "m" decision levels (ESE1, ESE2) in such a manner that the relationship "2^{m} ≥ n ≥ 2^{m-1} +1" is true.

3. Method according to Claim 1 or 2, characterized in that the electrical apparatus (K-MT) is a cordless mobile part.

4. Method according to Claim 3, characterized in that the cordless mobile part (K-MT) is operated in a first operating mode "Operation on a convenience charging station" (BZ1), a second operating mode "Operation on a standard charging station" (BZ2), a third operating mode "Operation on a headset" (BZ3) or a fourth operating mode "Operation as a handset" (BZ4).

5. Method according to Claim 4, characterized in that a first selection feature "Is any charging current flowing?" (SM1) and a second selection feature "Is any microphone current flowing?" (SM2) are interrogated.

6. Electrical apparatus which
a) can assume a first number "n" of operating modes (BZ1...BZ4) where "n ≥ 4" from an original mode (AZ),
b) has first means (K-AK1...K-AK4, SE1, SE2, ADW) for detection of selection features (SM1, SM2) for the operating modes (BZ1...BZ4),
c) has second means (K-ZS, K-µC) for controlling the apparatus-specific functional sequences, which are connected to the first means (K-AK1...K-AK4, SE1, SE2, ADW) and which are designed in such a manner that interrogation is in each case carried out at the branch points (VZS1, VZS2) on the basis of a selection feature (SM1, SM2) of the operating modes (BZ1...BZ4) in accordance with a decision tree (ESB) having a plurality of decision levels (ESE1, ESE2) and level-immanent branch points (VZS1, VZS2),
characterized in that the second means (K-ZS, K-µC) are designed in such a manner that interrogation is in each case carried out, at all the branch points (VZS1, VZS2) in each decision level (ESE1, ESE2), on the basis of the same selection feature (SM1, SM2).

7. Electrical apparatus according to Claim 6, characterized in that the second means (K-ZS, K-µC) are designed in such a manner that in the sense of minimizing a second number "m" of decision levels (ESE1, ESE2), the branch points (VZS1, VZS2) are arranged in the "m" decision levels (ESE1, ESE2) in such a manner that the relationship "2^{m} ≥ n ≥ 2^{m-1} +1" is true.

8. Electrical apparatus according to Claim 6 or 7, characterized in that the electrical apparatus (K-MT) is a cordless mobile part.

9. Electrical apparatus according to Claim 8, characterized in that the cordless mobile part (K-MT) has a first operating mode "Operation on a convenience charging station" (BZ1), a second operating mode "Operation on a standard charging station" (BZ2), a third operating mode "Operation on a headset" (BZ3) and a fourth operating mode "Operation as a handset" (BZ4).

10. Electrical apparatus according to Claim 9, characterized in that the first means (K-AK1...K-AK4, SE1, SE2, ADW) are designed in such a manner that a first selection feature "Is any charging current flowing?" (SM1) and a second selection feature "Is any microphone current flowing?" (SM2) can be detected.

11. Electrical apparatus according to Claim 9 or 10, characterized in that the first means (K-AK1...K-AK4, SE1, SE2, ADW) have four connecting contacts (K-AK1...K-AK4) via which the electrical apparatus (K-MT) can be connected to a convenience charging station (K-LST), a standard charging station (S-LST) or a headset (KSG).

## Revendications

1. Procédé pour détecter des états de fonctionnement d'un appareil électrique, au cours duquel
a) l'appareil électrique (K-MT) peut prendre, en partant d'un état primaire (AZ), un premier nombre "n" d'états de fonctionnement (BZ1, ..., BZ4), avec "n ≥ 4",
b) conformément à un arbre de décision (ESB) avec plusieurs niveaux de décision (ESE1, ESE2) et des points de dérivation (VZS1, VZS2), immanents à chaque niveau, une interrogation des états de fonctionnement est effectuée, aux points de dérivation (VZS1, VZS2), respectivement selon un critère de sélection (SM1, SM2) des états de fonctionnement (BZ1, ..., BZ4),
**caractérisé par le fait**
que l'interrogation est effectuée, à tous les points de dérivation (VZS1, VZS2) de chaque niveau de décision (ESE1, ESE2), respectivement selon le même critère de sélection (SM1, SM2).

2. Procédé selon la revendication 1 **caractérisé par le fait** que, dans le sens de la compression d'un deuxième nombre "m" de niveaux de décision (ESE1, ESE2), les points de dérivation (VZS1, VZS2) sont disposés dans les "m" niveaux de décision (ESE1, ESE2) de telle sorte que la relation "2^{m} ≥ n ≥ 2^{m-1} + 1" est valable.

3. Procédé selon la revendication 1 ou 2 **caractérisé par le fait** que l'appareil électrique (K-MT) est un poste mobile sans cordon.

4. Procédé selon la revendication 3 **caractérisé par le fait** que le poste mobile sans cordon (K-MT) est exploité dans un premier état de fonctionnement "Fonctionnement sur un socle chargeur de confort" (BZ1), dans un deuxième état de fonctionnement "Fonctionnement sur un socle chargeur standard" (BZ2), dans un troisième état de fonctionnement "Fonctionnement avec un micro-casque" (BZ3) ou dans un quatrième état de fonctionnement "Fonctionnement comme combiné" (BZ4).

5. Procédé selon la revendication 4 **caractérisé par le fait** qu'une interrogation est effectuée sur un premier critère de sélection "Est-ce qu'un courant de charge circule ?" (SM1) et sur un deuxième critère de sélection "Est-ce qu'un courant de microphone circule ?" (SM2).

6. Appareil électrique qui
a) peut prendre, à partir d'un état primaire (AZ), un premier nombre "n" d'états de fonctionnement (BZ1, ..., BZ4), avec "n ≥ 4",
b) comporte des premiers moyens (K-AK1, ..., K-AK4, SE1, SE2, ADW) pour détecter des critères de sélection (SM1, SM2) des états de fonctionnement (BZ1, ..., BZ4),
c) comporte des deuxièmes moyens (K-ZS, K-µC) pour commander les séquences de fonctions spécifiques des appareils, lesquels moyens sont liés aux premiers moyens (K-AK1, ..., K-AK4, SE1, SE2, ADW) et qui sont conçus de telle sorte que, conformément à un arbre de décision (ESB) avec plusieurs niveaux de décision (ESE1, ESE2) et des points de dérivation (VZS1, VZS2), immanents à chaque niveau, une interrogation selon un critère de sélection (SM1, SM2) des états de fonctionnement (BZ1, ..., BZ4) est effectuée à chaque point de dérivation (VZS1, VZS2),
**caractérisé par le fait**
que les deuxièmes moyens (K-ZS, K-µC) sont conçus de telle sorte qu'une interrogation est effectuée, à tous les points de dérivation (VZS1, VZS2) de chaque niveau de décision (ESE1, ESE2), respectivement selon le même critère de sélection (SM1, SM2).

7. Appareil électrique selon la revendication 6 **caractérisé par le fait** que les deuxièmes moyens (K-ZS, K-µC) sont conçus de telle sorte que, dans le sens de la compression d'un deuxième nombre "m" de niveaux de décision (ESE1, ESE2), les points de dérivation (VZS1, VZS2) sont disposés dans les "m" niveaux de décision (ESE1, ESE2) de telle sorte que la relation "2^{m} ≥ n ≥ 2^{m-1} + 1" est valable.

8. Appareil électrique selon la revendication 6 ou 7 **caractérisé par le fait** que l'appareil électrique (K-MT) est un poste mobile sans cordon.

9. Appareil électrique selon la revendication 8 **caractérisé par le fait** que le poste mobile sans cordon (K-MT) présente un premier état de fonctionnement "Fonctionnement sur un socle chargeur de confort" (BZ1), un deuxième état de fonctionnement "Fonctionnement sur un socle chargeur standard" (BZ2), un troisième état de fonctionnement "Fonctionnement avec un micro-casque" (BZ3) et dans un quatrième état de fonctionnement "Fonctionnement comme combiné" (BZ4).

10. Appareil électrique selon la revendication 9 **caractérisé par le fait** que les premiers moyens (K-AK1, ..., K-AK4, SE1, SE2, ADW) sont conçus de telle sorte qu'un premier critère de sélection "Est-ce qu'un courant de charge circule ?" (SM1) et un deuxième critère de sélection "Est-ce qu'un courant de microphone circule ?" (SM2) peuvent être détectés.

11. Appareil électrique selon la revendication 9 ou 10 **caractérisé par le fait** que les premiers moyens (K-AK1, ..., K-AK4, SE1, SE2, ADW) comportent quatre contacts de raccordement (K-AK1, ..., K-AK4) grâce auxquels l'appareil électrique (K-MT) peut être relié à un poste chargeur de confort (K-LST), à un poste chargeur standard (S-LST) ou à un micro-casque (KSG).
